Europäisches Patentamt

(19) European Patent Office

Office européen des brevets

(11) Publication number : **0 361 178 B1**

(12) **EUROPEAN PATENT SPECIFICATION**

(45) Date of publication of patent specification :
15.07.92 Bulletin 92/29

(51) Int. Cl.[5] : **B25J 21/00**, B25J 19/06,
// B25J18/02

(21) Application number : 89116648.0

(22) Date of filing : 08.09.89

(54) A plant for robot operations.

(30) Priority : 15.09.88 SE 8803255

(43) Date of publication of application :
04.04.90 Bulletin 90/14

(45) Publication of the grant of the patent :
15.07.92 Bulletin 92/29

(84) Designated Contracting States :
AT BE CH DE FR GB IT LI LU NL SE

(56) References cited :
"Nya Skyddsmöjligheter i Arbetet vid Indus-
trirobotar" Transport Teknik Skandinavia
10/1986 (Paul E Branke)
Symposium on Industrial Robots 7 th Inter-
national Conf. on Ind: Robot Tehg. (N. Mar-
tensson) s. 119-129, " Oktober 1984

(56) References cited :
Praktiska Skyddslösningar IVF-skrift 88817
Praktiska Skyddslösningar - Industrirobotar
och andra Maskiner (Mats Linger) s.6-9 juni
1988

(73) Proprietor : TRANSMAN AB
Box 7
S-619 00 Trosa (SE)

(72) Inventor : Norman, Mauritz
Arrendegangen 17
S-619 00 Trosa (SE)
Inventor : Stenström, Valter
Östra Langgatan 63
S-619 00 Trose (SE)

(74) Representative : Lundquist, Lars-Olof
L-O Lundquist Patentbyra Box 80
S-651 03 Karlstad (SE)

## Description

The present invention relates to a plant for robot operations comprising a robot disposed on a stand, and a plurality of work stations served by the robot, the operating arm of said robot being movable to each work station from a starting position at the carrying body of the robot.

Robots are conventionally located on the floor in the middle of a plant for robot operations, i.e. an operating area including the work stations. An alternative is to suspend the robot over the operating area. For reasons of safety in both cases guards are required which surround the operating area and the robot and work stations therein. The safety guard has one or more gates allowing access to the operating area for repairs and maintenance. For reasons of safety the robot must then be switched off and all activity dependent thereon in the operating area must cease. Thus, if a small detail needs adjustment in one of the work stations, all robot activity must be stopped. This means that the production rate in the operating area is on average rather low, and is uneven and difficult to plan. Furthermore, obviously it is not possible to maintain production manually at any work station since this would require access to the operating area whereby the entire plant must be stopped for reasons of safety. The safety problems with the use of industrial robots have been discussed in Symposium on Industrial Robots, 7th International Conference on Industrial Robot Technology, Edited by N. Mårtensson, pages 119-129. The solutions for safety systems suggested in this article do not suggest the conception of the present invention.

The object of the invention is to eliminate the drawbacks mentioned above and provide a plant for robot operations which is highly flexible with respect to operation, repairs, service and maintenance, without neglecting safety precautions in the use of a robot serving primarily a plurality of work stations.

The novelty of the invention lies substantially in that the plant comprises a barrier surface defining a first space, in which the robot is located, and a second space, in which the work stations are located, that the barrier surface has sufficient strength to be impenetrable to the robot, and that the barrier surface includes hatches disposed opposite each work station, each hatch closing an opening through which the operating arm of the robot is movable to serve the work station when the hatch has been moved aside.

The robot may be moved in cartesian coordinates, e.g. as in the case of a portal robot, or in polar coordinates as in the case of a polar robot. The work stations may be of widely differing type, such as those occurring in machine workshops, assembly workshops, slaughter-houses, bakeries, textile factories, etc. and may thus be used for manufacture, assembly, dismantling, cutting, inspection, checking, storage, and so on.

The invention will be explained further with reference to the accompanying drawings.

Figure 1 shows schematically from the side a plant according to the invention with a portal robot and four work stations arranged one after the other.

Figure 2 shows schematically from the side the plant according to the invention with a polar robot and two work stations disposed next to each other.

Figure 3 shows schematically from above a plant according to the invention with a polar robot and five work stations disposed along a circular arc.

Figure 4 shows the operating arm of a portal robot in the form of a telescope arm according to the present invention.

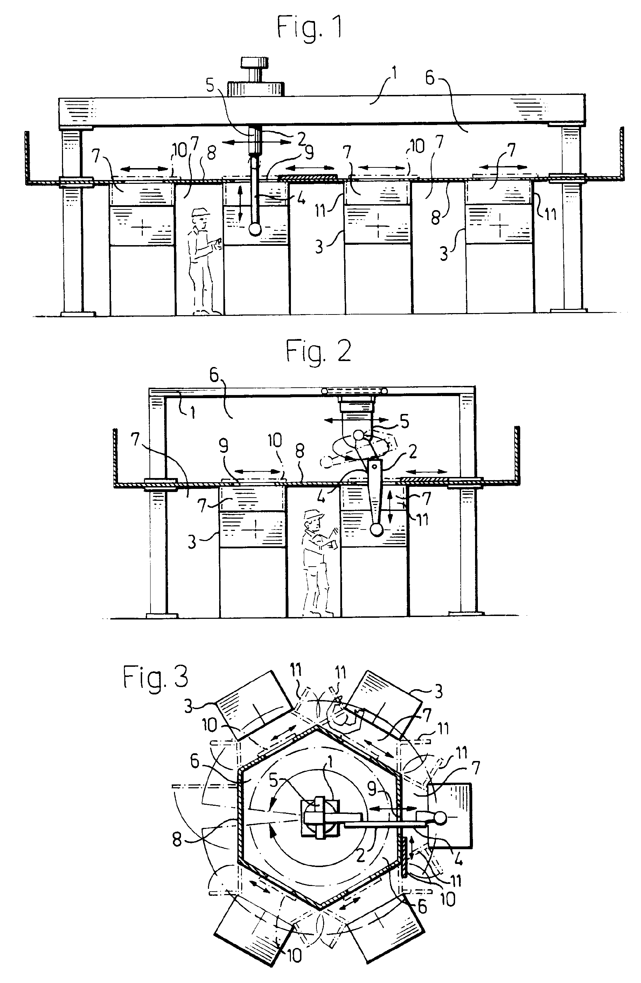

Each of the plants shown in Figures 1 to 3 comprises a robot 2 mounted on a stand 1, and a number of work stations 3 served by the robot 2, the operating arm 4 of the robot being movable to each work station 3 from a starting position near the carrying body 5 of the robot.

In order to be able to serve several work stations, such as a group of machines or assembly stations, or supply material to several places without any requirement to close down the entire plant when access is required by a person for servicing for instance, according to the invention the work area of the robot is divided into two different spaces 6, 7, separated by a barrier surface 8 in the form of a safety roof or safety wall. The robot 2 is disposed in one space 6 and is able to move freely within this space 6, limited by the work area of the robot 2 and the barrier surface 8.

In the second space 7, below the safety roof and beside the safety guard, respectively, the robot 2 only has access to those places where there are openings 9 between the spaces 6, 7.

The size of these openings 9 is adjusted to the actual operation and the openings 9 are provided with hatches 10 and guards 11. During servicing the guards 11 are moved aside and the hatch 10 is closed, thus denying the robot 2 access. The barrier surfaces 8 have sufficient strength to prevent the robot 2 from breaking through them. A suitable material is a net of wire. Such a wire netting is thus transparent in an advantageous manner.

Among the specific technical effects gained with the plant according to the present invention the following may be mentioned: Servicing or overhauling of work stations can be performed also when the robot is automatically performing operations in other work stations. The robot is not in the way within said space, irrespective of whether it is in operation or not. Area of premises is saved, and the safety roof with gates around the work stations are eliminated. Manual and automatic operations can be performed simultaneously in the stations without risk of injury to personnel. There is room for the distribution panel outside the robot space. Simplified service of the robot is achieved.

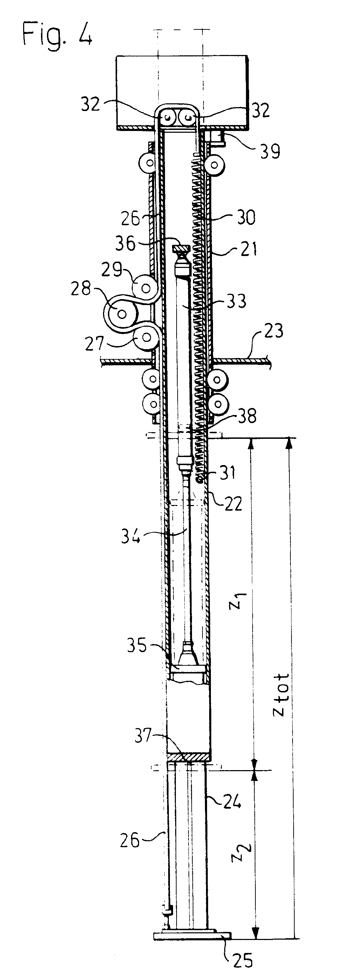

Figure 4 of the drawings shows a telescope arrangement for vertical lifts, known as a z-arm, for a portal robot carrying tools serving one or more work stations. Such a telescope arrangement is shown schematically in Figure 1 where the operating arm 5 is thus a vertically movable telescopic lifting arm. This embodiment of the invention offers a vertically operating portal robot arm with a telescopic lifting arm (z), which is thus able to operate under lower ceiling than a whole lifting arm.

The telescopic arrangement comprises a fixed casing tube 21 rigidly mounted in the horizontal carriage 23 of the portal robot, a first telescope part 22 ($z_1$) running inside the tube 21. A second telescope part 24 ($z_2$) runs inside the first telescope part 22. A tool holder is designated 25 and is mounted on the lower end of the second telescope part 24. Secured to the lower portion of the second telescope part 24 is a continuous flexible hoisting means in the form of a hoisting chain or belt 26 for lifting. The hoisting chain or belt 26 runs over a tension wheel 27, a drive wheel 28, and a tension wheel 29 and is secured to a tension spring 30 for varying take-up of length. The tension spring 30 is mounted in the slack portion end of the hoisting chain or belt 26 to take up "excess length" when the second telescope part 24 is telescopically retracted. The tension spring 30 for the hoisting chain or belt 26 is secured inside the first telescope part 22 at point 31. The drive wheel 28 for the hoisting chain or belt 26 can be driven by any type of rotating drive means, the movement of which being converted into a linear movement from rotation to translation. Two pulleys 32, mounted in the upper end of the first telescope part 22, are arranged for reverse direction of movement of the hoisting chain or belt 26. A pneumatic cylinder 33 with a movable piston joined to a piston rod 34 is disposed for performing retarding and propelling of the second telescope part 24 (up and down movement) when this is to be moved in relation to the first telescope part 22. The pneumatic cylinder 33 is regulated by an electrically controlled valve to which air enters one side of the piston when the second telescope part 24 is to be expelled from the first telescope part 22. This provides a balancing or counteracting force which prevents the first telescope part 22 from falling down over the second telescope part 24 due to gravity. In this way the hoisting chain or belt 26 can simultaneously lower both telescope parts 22, 24, these then functioning as a homogenous unit. The force in the pneumatic cylinder 33 only counterbalances the weight of the whole second telescope part 24, since the force in the hoisting chain or belt 26, which is secured to the second telescope part 24, holds both the load in the tool holder 25 and the two telescope parts 22, 24. Thus, during movement upwards, this entire unit (load, tools, telescope parts 22, 24) will be lifted by the hoisting chain or belt 26 until the first telescope part 22 is fully drawn in (upwards). The electric valve will then open by the action of a limit switch, whereupon the air on said piston side is pressed out through a throttle valve having limited drainage, and the second telescope part 24 will be compressed due to the continued pulling movement of the hoisting chain or belt 26 until it encounters an end-position stop. The hoisting chain or belt 26 will then be too long and the tension spring 30 will adjust and automatically keep the chain or belt taut. The piston rod end of the pneumatic cylinder 33 is secured to the upper part 35 of the second telescope part 24, the upper end of the pneumatic cylinder 33 being secured to the first telescope part 22 at a rigid attachment device 36. A stop device 37 in the form of a hydraulic shock-absorber is provided as end-position stop for the second telescope part 24 in the first tele scope part 22 during the upward movement. A stop device 38 in the form of a hydraulic shock-absorber is arranged as end-position stop for the first telescope part 22 in the outer, stationary tube 21 during upward movement. Further, a stop device 39 in the form of a hydraulic shock-absorber is arranged as end-position stop which is common for the two telescope parts 22, 24 during downward movement.

The outer tube 21 constitutes a stationary telescopic tube joined to the horizontal carriage 23 of the robot portal. The two tension wheels 27 and 29 are mounted on one side of the tube 21, with the drive wheel 28 between them. The hoisting chain or belt runs between these wheels which may consist of chain or teeth wheels. Any type of chains or belts can be used for the drive system, provided that they can be hooked onto the toothed surface of the intermediate drive wheel. The condition for the function is that the hoisting chain or belt is not allowed to be secured to surfaces along the two independently movable telescope tubes, nor to the outer tube.

The inner, i.e. the first, telescope part 22 consists of a tube which runs inside the outer tube 21 via some form of slide bearings, linear bearings, ball bearings or runners. The outer, i.e. the second, telescope part 22 consists of a tube or rod which runs inside the first telescope part 22 via some form of slide bearings, linear bearings, ball bearings or runners.

As mentioned, the hoisting chain or belt 26 of the drive system is joined at its lower end to the lower end of the second telescope part 24. Further, the hoisting chain or belt is joined to the upper end of the first telescope part 22, in this case over two pulleys 32, to a tension spring. By means of the pulleys 32 the upper end of the hoisting chain or belt is caused to turn and run down again in the first telescope part 22, so that the hoisting chain or belt 26 can be connected to the tension spring 30 for compensation of length. The lower end of the tension spring 30 is secured to the inside of the first telescope part 22. This arrangement allows the telescoping system to function so that when the drive wheel 28 retracts the second telescope part 24 into the first telescope part 22, the tension spring 30 will equalize and take up the excess length of the hoisting chain or belt 26. This occurs because the total length of the hoisting chain or belt corresponds to the fully expelled length of the two telescope parts 22, 24, and this length decreases as the telescope parts are drawn together.

As mentioned, by means of the pneumatic cylinder 33 a balance between the two telescope parts 22, 24 is produced and the order in which they shall telescope into each other in relation to the outer tube 21, in which they both run, can be determined. The compressive force of the pneumatic cylinder 33 according to the air-piston principle, corresponds to the entire inherent load of the first telescope part 22 and the force reserve corresponding to the acceleration force to which this inherent load is equivalent. As mentioned, this pneumatic cylinder is thus joined at its upper end to the first telescope part and at its lower end to the upper portion of the second telescope part 24. The cylinder is thus located inside the first telescope part 22 and is controlled via an electrically activated valve able to regulate the quantity and rate of flow of the air. A pressure regulator is connected before this valve, to control the force in the cylinder so that it counterbalances the inherent load and corresponding acceleration force of the first telescope part. By this function it can be predetermined that the first telescope part 22 shall enter the outer tube 21 first when the hoisting chain or belt pulls the unit up when the unit is attached to the second telescope part 24. When the first telescope part 22 has reached its upper end position, it will be stopped by said hydraulic shock-absorber and will actuate an electric limit switch. At this instant the valve is actuated and opened which, via a throttle valve, controls emptying of the cylinder and its compression, thus when the second telescope part runs into the first telescope part. When both the telescope parts 22, 24 have been received in each other, the z-movement is complete and the entire lifting movement has been performed with rotary operation. This is of considerable significance when dealing with robots since it results in lower costs and the movement can be controlled by means of pulse feedback to the control computer of the robot. During downward movement, the same cylinder chamber is filled with air and at the same time the hoisting chain or belt is allowed by the rotary operation to run in the opposite direction, i.e. downwards. Due to the force produced by the air entering, the first telescope part will remain in its upper position in the outer tube until the second telescope part 24 is fully expelled from the first telescope part 22. When this has occured, the first telescope part will move out of the outer tube 21 as the drive wheel continues to feed out the hoisting chain or belt. A full downwardly run-

ning z-movement ($z_{tot}$) will have been completed with one and the same rotating drive unit when the two telescope parts have reached their lowermost end positions.

## Claims

1. A plant for robot operations comprising a robot (2) disposed on a stand (1) and a plurality of work stations (3) served by the robot (2), the operating arm (4) of the robot (2) being movable to each work station (3) from a starting position at the carrying body (5) of the robot (2), characterized in that it comprises a barrier surface (8) defining a first space (6), in which the robot (2) is located, and a second space (7), in which the work stations (3) are located, that the barrier surface (8) has sufficient strength to be impenetrable to the robot (2), and that the barrier surface (8) includes hatches (10) disposed opposite each work station (3), each hatch (10) closing an opening (9) through which the operating arm (4) of the robot (2) is movable to serve the work station (3) when the hatch (10) has been moved aside.

2. A plant as claimed in claim 1, characterized in that the barrier surface (8) is disposed substantially horizontally to form a roof above the work stations.

3. A plant as claimed in claim 1, characterized in that the barrier surface (8) is disposed substantially vertically to form a wall between the robot and the work stations.

4. A plant as claimed in any of claims 1-3, characterized in that the part of the second space (7) located between each work station and the barrier surface (8) is surrounded by removable guards (11).

5. A plant as claimed in claim 4, characterized in that it comprises a device at each work station, which is arranged to close an opened hatch (10) when said guard (11) is removed from the work station in question, and a device which is arranged to permit removal of the guard (11) only when the hatch (10) is closed, and a device arranged to permit opening of the hatch (10) only when the guard (11) is applied.

6. A plant as claimed in any of claims 1-5, characterized in that the operating arm of the portal robot is designed as a vertical telescopic arrangement carrying the tools serving each work station.

7. A plant as claimed in claim 6, characterized in that the telescopic arrangement comprises a fixed casing tube (21) secured to the horizontal carriage (23) of the portal robot, a first telescope part (22) running inside the casing tube (21), and a second telescope part (24) running in the first telescope part (22).

8. A plant as claimed in claim 7, characterized in that said telescopic arrangement comprises a continuous flexible hoisting means in the form of a hoisting chain or belt (26), secured to the lower portion of the second telescope part (24) and running over a plurality of wheels including a drive wheel (28), tension wheels (27, 29) and pulleys (32), said hoisting chain or belt (26) being secured to the inside of the first telescope part (22) via a tension spring (30) which compensates to varying excess lengths of the hoisting chain or belt (26) when the second telescope part (24) is retracted into the first telescope part (22) so that the hoisting chain or belt (26) is maintained taut.

9. A plant as claimed in either of claims 7 and 8, characterized in that the telescope arrangement comprises a pneumatic cylinder (33) with a movable piston joined to a piston rod (34), said pneumatic cylinder (33) being arranged to retard and expell the second telescope part (24) when this is to be moved in relation to the first telescope part (22).

10. A plant as claimed in claim 9, characterized in that the pneumatic cylinder (33) is regulated by an electrically controlled valve by means of which air is filled into one side of the piston when the second telescope part (24) is to be expelled from the first telescope part (22), thus providing a balancing or counteracting force.


**Revendications**

1. Installation pour faire des opérations avec un robot comprenant un robot (2) disposé sur un support (1) et une pluralité de stations (3) de travail desservies par le robot (2), le bras (4) opérationnel du robot (2) étant déplaçable vers chaque station (3) de travail depuis une position de départ sur le corps (5) porteur du robot (2), caractérisée en ce qu'elle comprend une surface formant barrière (8) délimitant un premier espace (6) dans lequel le robot (2) est disposé, et un second espace (7) dans lequel les stations (3) de travail sont situées, en ce que la surface formant barrière (8) a une résistance suffisante empêchant la pénétration du robot (2), et en ce que la surface formant barrière (8) comprend des panneaux de trappe (10) disposés à l'opposé de chaque station (3) de travail, chaque panneau de trappe (10) fermant une ouverture (9) à travers laquelle le bras (4) opérationnel du robot (2) est déplaçable pour desservir une station (3) de travail lorsque le panneau de trappe (10) est déplacé sur le côté.

2. Installation selon la revendication 1, caractérisée en ce que la surface formant barrière (8) est disposée sensiblement horizontalement pour former un toit au dessus des stations de travail..

3. Installation selon la revendication 1, caractérisée en ce que la surface formant barrière (8) est disposée sensiblement verticalement pour former une paroi entre le robot et les stations de travail.

4. Installation selon l'une quelconque des revendications 1-3, caractérisée en ce que la partie du second espace (7) disposée entre chaque station de travail et la surface formant barrière (8) est entourée par des protections (11) amovibles.

5. Installation selon la revendication 4, caractérisée en ce qu'elle comprend un dispositif sur chaque station de travail qui est agencé pour fermer un panneau de trappe (10) ouvert lorsque la protection (11) est déplacée de la station de travail en question, et un dispositif qui est agencé pour permettre le déplacement de la protection (11) uniquement lorsque le panneau de trappe (10) est fermé et un dispositif agencé pour permettre l'ouverture du panneau de trappe (10) uniquement lorsque la protection (11) est appliquée.

6. Installation selon l'une quelconque des revendications 1-5, caractérisée en ce que le bras opérationnel du robot à portique consiste en un agencement télescopique vertical portant les outils desservant chaque station de travail.

7. Installation selon la revendication 6, caractérisée en ce que l'agencement télescopique comprend un tube formant gaine (21) fixe fixé au chariot (23) horizontal du robot à portique, une première partie (22) télescopique déplaçable à l'intérieur du tube (21) formant gaine, et une seconde partie (24) télescopique déplaçable dans la première partie (22) télescopique.

8. Installation selon la revendication 7, caractérisée en ce que l'agencement télescopique comprend des moyens de levage flexibles continus conformés en forme d'une courroie ou d'une chaîne (26) de levage, fixés à la partie basse de la seconde partie (24) télescopique et se déplaçant sur une pluralité de roues comprenant une roue (28) menante, des roues de tension (27,29) et des poulies (32), la courroie ou chaîne (26) étant fixée sur l'intérieur de la première partie (22) télescopique par l'intermédiaire d'un ressort (30) de tension qui compense les variations excessives de longueur de la chaîne ou courroie (26) de levage lorsque la seconde partie (24) télescopique est rétractée à l'intérieur de la première partie (22) télescopique de manière que la chaîne ou courroie (26) de levage est maintenue tendue.

9. Installation selon la revendication 7 ou 8, caractérisée en ce que l'agencement télescopique comprend un vérin (33) pneumatique muni d'un piston déplaçable relié à une tige (34) de piston, le vérin (33) pneumatique étant agencé pour retenir ou expulser la seconde partie (24) télescopique lorsque celle-ci doit être déplacée en relation avec la première partie (22) télescopique.

10. Installation selon la revendication 9, caractérisée en ce que le vérin (33) pneumatique est réglé par une vanne contrôlée électriquement à l'aide de laquelle de l'air est rempli dans un côté du piston lorsque la seconde partie (24) télescopique doit être expulsée de la première partie (22) télescopique, de façon à fournir une force d'équilibrage ou de réaction.

**Patentansprüche**

1. Anlage für Roboterbetrieb mit einem auf einem Gestell (1) angeordneten Roboter (2) und einer Mehrzahl durch den Roboter (2) bedienter Arbeitsstationen (3), wobei der Arbeitsarm (4) des Roboters (2) von einer Startstellung an seinem Tragkörper (5) zu jeder Arbeitsstation (3) bewegbar ist, dadurch gekennzeichnet, daß sie eine Trennfläche (8) aufweist, die einen ersten Raum (6), in dem der Roboter (2) angeordnet ist, und einen zweiten Raum (7) festlegt, in dem die Arbeitsstationen (3) angeordnet sind, daß die Trennfläche (8) genügend Festigkeit aufweist, um für den Roboter (2) undurchdringbar zu sein, und daß die Trennfläche (8) mit gegenüber jeder Arbeitsstation (3) angeordneten Deckeln (10) versehen ist, deren jeder (10) eine Öffnung (9) verschließt, durch die hindurch der Arbeitsarm (4) des Roboters (2) zur Bedienung der Arbeitsstation (3) bewegbar ist, wenn der Deckel (10) zur Seite bewegt ist.

2. Anlage nach Anspruch 1, dadurch gekennzeichnet, daß die Trennfläche (8) im wesentlichen horizontal angeordnet ist, um eine Abdeckung oberhalb der Arbeitsstationen auszubilden.

3. Anlage nach Anspruch 1, dadurch gekennzeichnet, daß die Trennfläche (8) im wesentlichen vertikal angeordnet ist, um eine Wand zwischen dem Roboter und den Arbeitsstationen auszubilden.

4. Anlage nach einem der Ansprüche 1 bis 3, dadurch gekennzeichnet, daß der zwischen jeder Arbeitsstation und der Trennfläche (8) liegende Teil des zweiten Raumes (7) von entfernbaren Schutzabdeckungen (11) umgeben ist.

5. Anlage nach Anspruch 4, dadurch gekennzeichnet, daß sie an jeder Arbeitsstation eine Einrichtung, die einen geöffneten Deckel (10) schließt, wenn die Schutzabdeckung (11) von der betreffenden Arbeitsstation entfernt ist, und eine Einrichtung, die ein Entfernen der Schutzabdeckung (11) nur ermöglicht, wenn der Deckel (10) geschlossen ist, sowie eine Einrichtung aufweist, die ein Öffnen des Deckels (10) nur zuläßt, wenn die Schutzabdeckung (11) geschlossen ist.

6. Anlage nach einem der Ansprüche 1 bis 5, dadurch gekennzeichnet, daß der Arbeitsarm des Portalroboters als eine vertikale Teleskopanordnung ausgebildet ist, welche die Werkzeuge zur Bedienung jeder Arbeitsstation trägt.

7. Anlage nach Anspruch 6, dadurch gekennzeichnet, daß die Teleskopanordnung ein feststehendes Gehäuserohr (21) aufweist, das an dem Horizontalschlitten (23) des Portalroboters befestigt ist, wobei ein erstes Teleskopteil (22) innerhalb des Gehäuserohrs (21) und ein zweites Teleskopteil (24) im ersten Teleskopteil (22) läuft.

8. Anlage nach Anspruch 7, dadurch gekennzeichnet, daß die Teleskopanordnung eine kontinuierliche, flexible Hebeeinrichtung in Form einer Hebekette oder eines Heberiemens (26) aufweist, die bzw. der am unteren Abschnitt des zweiten Teleskopteiles (24) befestigt ist und über eine Mehrzahl von Rollen mit einer Antriebsrolle (28), Zugrollen (27, 29) und Laufrollen (32) läuft, wobei die Hebekette oder der Heberiemen (26) an der Innenseite des ersten Teleskopteiles (22) über eine Spannfeder (30) befestigt ist, welche die sich ändernden Überlängen der Hebekette oder des Heberiemens (26) ausgleicht, wenn das zweite Teleskopteil (24) in das erste Teleskopteil (22) eingezogen wird, damit die Hebekette oder der Heberiemen (26) gespannt bleibt.

9. Anlage nach Anspruch 7 oder 8, dadurch gekennzeichnet, daß die Teleskopanordnung einen Pneumatik-Zylinder (33) mit einem beweglichen, an eine Kolbenstange (34) angeschlossenem Kolben aufweist, wobei der Pneumatik-Zylinder (33) so eingerichtet ist, daß er das zweite Teleskopteil (24) verzögert und hinausdrückt, wenn dieses relativ zu dem ersten Teleskopteil (22) bewegt werden soll.

10. Anlage nach Anspruch 9, dadurch gekennzeichnet, daß der Pneumatik-Zylinder (33) durch ein elektrisch gesteuertes Ventil gesteuert wird, über das Luft auf eine Seite des Kolbens gepumpt wird, wenn das zweite Teleskopteil (24) aus dem ersten Teleskopteil (22) hinausgedrückt werden soll, um so eine Ausgleichs- oder Gegenkraft zu schaffen.

Fig. 1

Fig. 2

Fig. 3

Fig. 4